# EUROPEAN PATENT APPLICATION

(11) **EP 4 851 946 A1**
(43) Date of publication of application: **09.12.2026**
(21) Application number: 25300079.8
(22) Date of filing: 06.06.2025
(51) Int. Cl.: G06V 10/30, G06T 5/60, G06T 5/70

(54) **MACHINE LEARNING BASED DENOISERS FOR IMAGES**

(71) Applicant: Sony Interactive Entertainment Inc., Tokyo 108-0075 (JP)
(72) Inventor: MAKRIDIS, Pavlos, Tokyo, 108-0075 (JP); LECHAT, Alexis, Tokyo, 108-0075 (JP); TREDER, Matthias, Tokyo, 108-0075 (JP); TORANO, Jesus Alejandro Zarzar, Tokyo, 108-0075 (JP)
(74) Representative: Fish & Richardson P.C.

(57) **Abstract**

Methods, systems, and apparatus for provisioning application-specific denoisers for denoising images receiving first rendering data representative of a first set of images rendered by a first application, generating a first set of pseudo-ground truth images by processing the first rendering data through a machine learning (ML)-based denoiser, fine tuning a first pre-trained ML-based denoiser using first training data including the first set of images and the first set of pseudo-ground truth images to provide a first fine-tuned pre-trained ML-based denoiser that is specific to the first application, and deploying the first pre-trained ML-based denoiser with the first application for denoising images generated by the first application in real-time.

## Description

### TECHNICAL FIELD

This specification relates generally to real-time rendering of digital images and more particularly to fine-tuning pre-trained denoisers for denoising digital images.

### BACKGROUND

Real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

### SUMMARY

This specification describes systems, methods, devices, and other techniques relating to real-time rendering of digital images and more particularly to fine-tuning pre-trained denoisers for denoising digital images.

In general, innovative aspects of the subject matter described in this specification can include actions of receiving first rendering data representative of a first set of images rendered by a first application, generating a first set of pseudo-ground truth images by processing the first rendering data through a machine learning (ML)-based denoiser, fine tuning a first pre-trained ML-based denoiser using first training data including the first set of images and the first set of pseudo-ground truth images to provide a first fine-tuned pre-trained ML-based denoiser that is specific to the first application, and deploying the first pre-trained ML-based denoiser with the first application for denoising images generated by the first application in real-time. Other implementations of this aspect include corresponding systems, apparatus, and computer programs, configured to perform the actions of the methods, encoded on computer storage devices.

These and other implementations can each optionally include one or more of the following features: the first fine-tuned pre-trained ML-based denoiser is provided as a set of hyperparameters that are stored with the first application; actions further include replacing hyperparameters of a pre-installed denoiser on a computing device with the set of hyperparameters; actions further include storing the first rendering data in a secure storage separate from rendering data received from one or more other sources; the first rendering data is received from a first developer and the one or more other sources include a second developer; the ML-based denoiser is of a first size and generates denoised images at a first speed and the first fine-tuned pre-trained ML-based denoiser is of a second size and generates denoised images at a second speed, the first size being greater than the second size and the first speed being slower than the second speed; actions further include fine tuning a second pre-trained ML-based denoiser using the first training data, the second pre-trained ML-based denoiser being specific to the first application, wherein one of the first pre-trained ML-based denoiser and the second pre-trained ML-based denoiser is used with the first application; actions further include receiving second rendering data representative of a second set of images rendered by a second application, generating a second set of pseudo-ground truth images by processing the second rendering data through the ML-based denoiser, fine tuning a second pre-trained ML-based denoiser using second training data including the second set of images and the second set of pseudo-ground truth images to provide a second fine-tuned pre-trained ML-based denoiser that is specific to the second application, and deploying the second pre-trained ML-based denoiser with the second application for denoising images generated by the second application in real-time; and the first application generates images in the first set of images using Monte Carlo rendering.

The present disclosure also provides a non-transitory computer-readable storage medium coupled to one or more processors and having instructions stored thereon which, when executed by the one or more processors, cause the one or more processors to perform operations in accordance with implementations provided herein.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

Particular implementations of the subject matter described in this specification can be executed so as to realize one or more of the following advantages.

Implementations of the present disclosure obviate the need for developers of applications (e.g., video game developers) to generate ground truth images (also referred to herein as ground truths), which is time- and resource-intensive. For example, in traditional approaches, provisioning of ML-based denoisers requires developers to generate or provide ground truths, which is often infeasible. Implementations of the present disclosure removes that requirement entirely, easing integration into proprietary pipelines, while providing actual image data (e.g., gameplay image data) instead of the synthetic datasets typically used for training denoisers. Implementations of the present disclosure also enable scene-specific adaptation of ML-based denoisers. For example, the fine-tuning process uses noisy data (noisy images) from actual scenes provided from developers, which enables the denoiser to adapt specifically to the lighting, geometry, material distributions, and the like, that are depicted in the scenes.

Implementations of the present disclosure can be realized with low integration overhead. For example, proprietary data can be provided from the developers using client-side mechanisms that can be integrated into test builds, for example, with minimal technical expense. Further, data collection and transfer is automated. Implementations of the present disclosure improve improved runtime quality of applications. For example, the fine-tuned ML-based denoiser improves visual fidelity of images generated in real-time as compared to general-purpose denoisers trained on unrelated data.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGs. 1A and 1B depict diagrams representative of techniques for real-time rendering of images.
FIGs. 2A to 2E depict diagrams and images representative of noise introduced in real-time rendering of images.
FIG. 3 depicts a schematic diagram of an architecture in accordance with implementations of the present disclosure.
FIGs. 4A and 4B depict flow diagrams of example processes in accordance with implementations of the present disclosure.
FIG. 5 shows an example of a computing device and associated accessories that can be employed to execute implementations of the present disclosure.

Like reference numbers and designations in the various drawings indicate like elements.

### DETAILED DESCRIPTION

The technology of this patent application is directed to real-time rendering of digital images and denoising images using machine learning (ML) -based denoisers. More particularly, the technology of this patent application is directed to fine-tuning pre-trained denoisers for denoising digital images in applications (e.g., video games).

To provide context for the subject matter of the present disclosure, real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. Using video games as a non-limiting example, real-time rendering enables players to see and interact with a game world that updates in real-time in response to player input (e.g., moving a character, changing a camera angle). The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

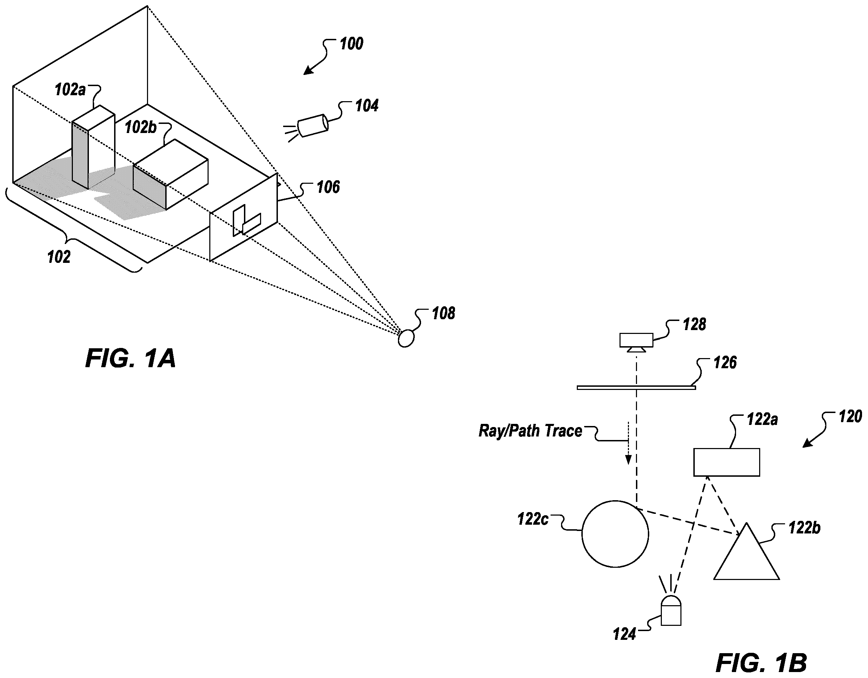

Real-time rendering of images is discussed in further detail herein with reference to FIGs. 1A and 1B, which depict schematic diagrams representative of techniques for real-time rendering of images. As used herein, the term real-time refers to execution of operations (e.g., processing data, transmitting data) without intentional delay given processing limitations of a system, the time required to accurately obtain data, store data, and the like, and any rate of change of data.

With particular reference to FIG. 1A, an environment 100 includes a multi-dimensional model 102 (a three-dimensional (3D) model) representative of a scene (e.g., a scene within a game world). For example, the multi-dimensional model 102 can be generated by an application (e.g., a video game application) and depicts objects 102a, 102b and represents interactions with and/or between the objects 102a, 102b within the scene. A light source 104 casts light on the scene that affects the appearance of the objects 102a, 102b within the scene. Although a single light source 104 is depicted, it is contemplated that multiple light sources can be provided. In the example of FIG. 1A, the light results in the objects 102a, 102b casting respective shadows.

With regard to real-time rendering, an image displayed within an image plane 106 is generated from the perspective of a camera 108. The image depicts a two-dimensional (2D) representation of the 3D scene. The image can be, for example, a frame of a series of frames to depict animation within the scene. That is, the image is regenerated at a frame-rate (e.g., ≥ 60 FPS) to depict changes in the scene over time (e.g., as the objects 102a, 102b interact with each other, as users interact with the objects, as the position of the camera 108 changes). The image is provided as a set of pixels (e.g., a 4K image (3840 x 2160 pixels), a 1080p image (1920 x 1080 pixels), a 1440p image (2560 x 1440 pixels). Each pixel is associated with a set of data that describes characteristics of subject matter that is depicted in the image (e.g., the objects 102a, 102b). Example data in the set of data can include color data (e.g., RGBA data), depth data (e.g., Z-buffer), stencil data, normal vector (surface direction), and the like.

With reference to FIG. 1B, techniques referred to as ray tracing and path tracing will be described. In general, ray tracing can be described as the operation of tracing a ray and finding its first intersection point (referred to as hit) with the geometry within the scene. Path tracing extends additional rays from hits (e.g., from the first hit determined using ray tracing) to effectively bounce around the geometry to define a light path. For clarity, the term path tracing is used for the following discussion.

Path tracing can be used for real-time rendering of high quality (e.g., photorealistic) images by simulating the manner in which light interacts with objects in a scene. FIG. 1B depicts an environment 120 representative of a scene having objects 122a, 122b, 122c. A light source 124 emits light on the scene and a camera 128 generates images of the scene. An image can be represented in an image plane 126.

Path tracing performs pixel shading to simulate global illumination to account for more complex interactions and to improve image realism. Path tracing, which includes multiple bounces within the scene along paths, simulates complex light paths including indirect lighting, color bleeding, caustics, and the like. For path tracing, each pixel requires numerous rays (tens, hundreds, thousands) to be considered in order to provide a noise-free, accurate image. This is computationally expensive and too slow for real-time rendering under realistic hardware constraints.

For each pixel, the rendering equation is approximated to determine the total outgoing light from the surface represented in the respective pixel as a function of emitted light, incoming light, material properties (e.g., mirror, glossy, matte), and geometric properties (e.g., Lambert Cosine Law). Due to the complexity of the rendering equation, which is a recursive equation, particularly when accounting for indirect lighting and multiple light-surface interactions, a direct analytical solution is not feasible.

To address the computational expense of techniques such as path tracing and the infeasibility of calculating the rendering equation, Monte Carlo rendering has become a widely adopted technique. Monte Carlo rendering produces photorealistic images by simulating the physical behavior of light. At a high-level, Monte Carlo rendering uses probability and randomness to approximate lighting values that would be too complex and/or too slow to compute under realistic hardware constraints.

Specifically, Monte Carlo rendering utilizes stochastic sampling to approximate solutions to the rendering equation, discussed above, which models the transport of light in a virtual scene. Monte Carlo rendering employs random sampling to estimate the integral components of light transport, where light contribution is computed based on probabilistic sampling, using functions such as the bidirectional reflectance distribution function (BRDF) to evaluate the surface response. The results from the sampled paths are averaged to estimate the color or radiance of each pixel in the image. As more samples are taken, the estimate converges toward an accurate solution, enabling realistic simulation of lighting phenomena such as soft shadows, indirect illumination, and caustics.

In achieving convergence, Monte Carlo rendering limits the number of paths (rays cast) per pixel, where each path is considered a sample. Accordingly, a metric, referred to as samples per pixel (SPP), is used to limit a number of paths (rays cast) processed for each pixel. The higher the SPP, the more computationally intensive (and slow) the processing and the better the accuracy of the rendered image. The lower the SPP, the more computationally efficient (and fast) the processing, but accuracy is lost. Further, due to its stochastic nature, Monte Carlo rendering introduces noise, which increases with lower SPPs. The more noise, the lower the visual fidelity (accuracy) of the rendered image.

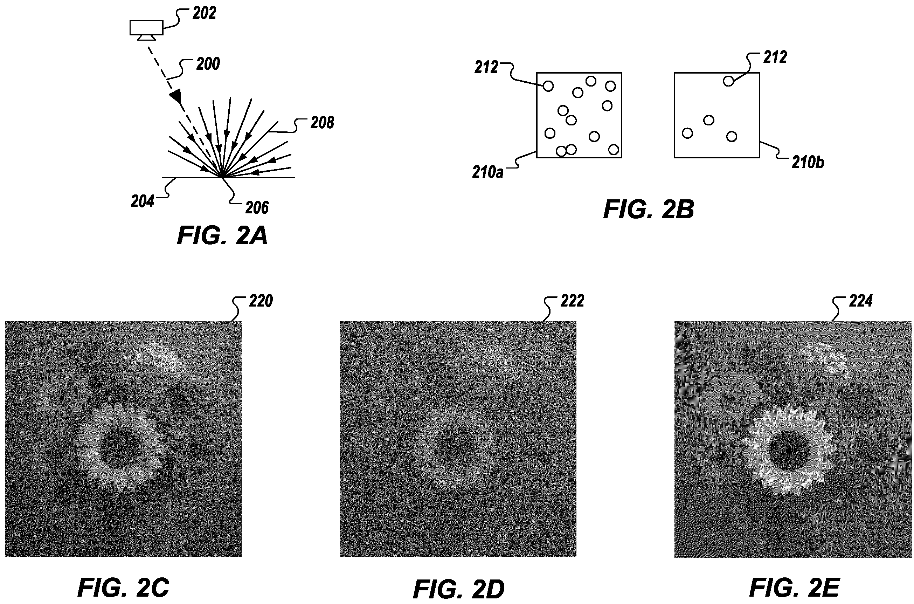

FIGs. 2A to 2E depict diagrams and images representative of noise introduced in real-time rendering of images. In the example of FIG. 2A, for a pixel, a path 200 of a ray is cast from a camera 202 and contact a surface 204 at a point 206. Here, the surface 202 represents a surface of an object within a scene and the point 206 is the point, from which the ray is reflected to the camera 202 along the path 200. As discussed above, the rendering equation is solved for the ray to determine the outgoing light of the rays toward the camera 202. As discussed above this, among other properties, is a function of incoming light represented as incoming rays 208 (e.g., from direct light source(s), from indirect light source(s)). The ray can be one of tens, hundreds, thousands, or more rays for the pixel that could be reflected from the surface 204 at various angles. Ideally, the outgoing light for the pixel would be calculated over all of the rays with a given outgoing light for each ray. However, this is computationally infeasible, particularly under realistic hardware constraints.

To address this, and as discussed above, Monte Carlo rendering randomly samples rays (paths) to provide a sample of rays that the rendering equation is solved over. That is, Monte Carlo rendering is performed using a selected SPP to limit the number of rays (paths) considered. To further improve computational efficiency, the number of incoming rays 208 considered in the calculations can be limited. For example, techniques, such as importance sampling and multiple importance sampling can be used to limit the number of incoming rays 208 used for the calculations.

FIG. 2B depicts a pixel 210a and a pixel 210b, each pixel 210a, 210b having multiple samples 212, each sample indicating a respective ray that contributes an outgoing light value to the total outgoing light value determined for the respective pixel. In the example of FIG. 2B, the pixel 210a has a first SPP (e.g., 12 SPP) and the pixel 210b has a second SPP (e.g., 4 SPP) that is lower than the first SPP. As such, the first SPP results in a noisy image that has a higher fidelity than a noisy image resulting from the second SPP. For example, an image 220 of FIG. 2C can represent a noisy image that is generated using the first SPP and an image 222 of FIG. 2D can represent a noisy image that is generated using the second SPP. As represented in FIGs. 2C and 2D, lower SPPs result in a higher amount of noise. As such, while lower SPPs are more computationally efficient, they result in images having higher amounts of noise and thus, less accurate (lower fidelity) images.

For real-time rendering applications, denoising is used to maintain visual fidelity (accuracy) and computational performance. At a high-level, denoising includes applying a denoiser to noisy images to smooth out the noise and produce a cleaner, more visually accurate image (i.e., an output image that is less noisy than an input image). Denoising can include spatial filtering based on neighboring pixels and temporal filtering based on pixels from previous frames. In some cases, denoising can include using machine learning (ML) models that are trained to reconstruct higher quality images from lower quality, noisy images. With reference to FIG. 2D, an image 224 can be provided as a denoised image of one of the images 220, 222 of FIGs. 2C and 2D, respectively.

In Monte Carlo rendering, denoising can be implemented in various ways. While convolutional neural networks (CNNs) are commonly used for Monte Carlo rendering, Vision Transformers (ViTs) have recently shown strong performance in image understanding and are being applied to Monte Carlo rendering pipelines. A ViT is a transformer-based neural network adapted for image processing tasks, such as denoising and adaptive sampling in Monte Carlo rendering. A ViT operates on noisy, low SPP rendered images and can utilize auxiliary data, such as surface normals, depth, and albedo. The input image can be divided, for example, into fixed-size patches, which are processed as tokens (e.g., using self-attention) to capture spatial and contextual relationships. The output of the ViT is a denoised image approximating the quality of a high SPP render. A ViT can also support adaptive sampling by identifying regions requiring additional samples, thereby improving efficiency and image fidelity, while reducing computational cost.

ML-based denoisers, such as ViTs, are increasingly used to accelerate path tracing and ray tracing workflows in real-time rendering. However, the quality and generalization ability of the ML-based denoisers typically depend on supervised training using high-quality ground truth images, also referred to as ground truths herein. Ground truths are generated using offline path tracing with a relatively high SPP. This process is computationally expensive, time-consuming, and often impractical for application developers (e.g., video game developers), particularly when working with proprietary scenes or confidential assets that cannot be easily shared with external vendors.

In view of the foregoing, implementations of the present disclosure provide a system that enables developers access to fine-tuned ML-based denoisers for use in real-time rendering of images that are specific to a particular application (e.g., a video game) without the need to generate or supply conventional ground truth images. More particularly, and as described in further detail herein, implementations of the present disclosure leverage a cloud-based infrastructure to perform high-quality, offline ML-based denoising on developer-provided noisy data, producing pseudo-ground truths that are used for supervised fine-tuning of ML-based denoisers.

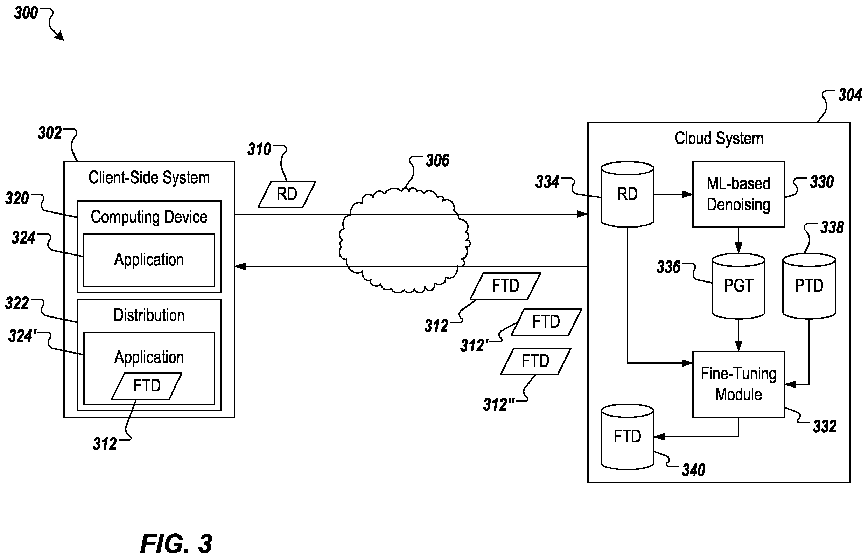

FIG. 3 depicts a schematic diagram of an architecture 300 in accordance with implementations of the present disclosure. In the example of FIG. 3, the architecture 300 includes a client-side system 302 and a cloud-based system 304 that communicate over a network 306. In some examples, the client-side system 302 can be operated by or on behalf of a developer of an application, such as a video game. In some examples, the cloud-based system 304 can be operated by or on behalf of a platform provider. An example platform provider can be an enterprise that provides platform hardware for applications developed by the developer. For example, the enterprise can be a manufacturer of a gaming system (hardware platform) that executes the application as a video game. In some examples, the network 106 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In the depicted example, the client-side system 302 includes a computing device 320 and a distribution system 322. For example, the computing device 320 can be a gaming console. In some examples, the computing device 320 can execute an application 324. For example, the application 324 can be a video game. In the depicted example, the cloud-based system 304 includes a ML-based denoising module 330, a fine-tuning module 332, a rendering data store 334, a pseudo-ground truth store 336, a pre-trained denoiser (PTD) store 338, and a fine-tuned denoiser (FTD) store 340.

In accordance with implementations of the present disclosure, the computing device 320 executes the application 324 to generate images. For example, a developer of the application 324 can execute the application 324 in a testing phase, during which images are generated and recorded. Each image is represented as image data (e.g., RGB data) that can be provided as rendering data 310. In some examples, the rendering data 310 is image data of multiple images (e.g., tens, hundreds, thousands of images). As described herein, each image depicts a scene (e.g., a scene within a 3D model, such as that represented in FIG. 1). In some examples, each image is generated using Monte Carlo rendering at a predefined SPP (e.g., < 10 SPP). For example, the application (e.g., a video game) can be executed by the computing device 320 (e.g., a gaming console) to depict the scene and to generate the rendering data 310. In some examples, the image data of an image includes pixel vectors, each pixel vector representative of properties (e.g., RGB data) of a respective pixel in a set of pixels (e.g., 921,600 pixels for a 1280 × 720 (720p) image).

In some implementations, the rendering data 310 is transmitted from the client-side system 302 to the cloud system 304 over the network 306. For example, the rendering data 310 can be transferred using an application programming interface (API) that is exposed for the cloud system 304. In some examples, the rendering data 310 is stored in the rendering data store 334. In some examples, the rendering data store 334 is a secure data store. In some examples, the rendering data 310 is securely separated from rendering data received from other developers within the rendering data store 334.

In accordance with implementations of the present disclosure, the rendering data 310 is processed by the ML-based denoising module 330 to generate pseudo-ground truths as denoised images. More particularly, the ML-based denoising module 330 executes a ML-based denoiser, which receives the rendering data 310 as input and provides pseudo-ground truths as output and stored in the pseudo-ground truth store 336. For example, a pseudo-ground truth (denoised image) is generated by the ML-based denoiser for each (noisy) image represented in the rendering data 310. In some examples, the ML-based denoiser executed by the ML-based denoising module 330 can be described as a heavy (e.g., large in terms of memory) ML model that produces high-quality denoised images, but is too computationally intensive and/or slow for use in real-time scenarios. For example, the ML-based denoiser can be a ViT that, in denoising images, consumes an amount of technical resources (e.g., processors, memory) that are not practically available in consumer computing devices, such as gaming consoles, and/or requires an amount of time (e.g., > 1 second) to denoise images that is unacceptable for real-time scenarios.

In accordance with implementations of the present disclosure, a pre-trained denoiser is fine-tuned to provide the fine-tuned ML-based denoiser 312. For example, the pre-trained denoiser is retrieved from the pre-trained denoiser store 338 and is fine-tuned by the fine-tuning module 332. In some examples, the pre-trained denoiser is provided as a lighter (e.g., smaller in terms of memory) ML model that generates lower quality denoised images, relative to the ML models used to generate the pseudo-ground truths, but is rapid enough to be used in real-time scenarios (e.g., denoises images in a few milliseconds). For example, the pre-trained denoiser is provided as a neural network (e.g., a CNN).

At a high-level, fine-tuning can be described as a transfer learning technique, in which a pre-trained model is adapted to a new, often related task. In the context of the present disclosure, a pre-trained denoiser is trained to denoise images using large, generalized datasets that are not particular to any application, such as the application 324. More plainly stated, the pre-trained denoiser is trained on image data that depicts generalized scenes across multiple, disparate applications, for example. Use of a pre-trained denoiser enables the knowledge already learned from the large, generalized dataset to be leveraged to be specific to a particular application, such as the application 324, reducing the time, data, and computational resources needed for training a denoiser from scratch. Fine-tuning of the pre-trained denoiser adapts the denoiser to denoise images that are specific to an application, such as the application 324.

In further detail, fine-tuning can include modifying the architecture of the pre-trained model and/or at least a portion of hyperparameters of the pre-trained model. In some examples, modifying the architecture of the pre-trained model can include replacing one or more of the final output layers to match to the specific task. Fine-tuning is executed to determine values of hyperparameters of the replaced final output layer(s). In some examples, hyperparameters of one or more earlier layers (e.g., layers closer to the input) that capture general features can be frozen, such that values of hyperparameters of the frozen layers do not change during fine-tuning.

In accordance with implementations of the present disclosure, fine-tuning is executed using the rendering data 310 and the pseudo-ground truths to provide the fine-turned ML-based denoiser 312, which is stored in the fine-tuned denoiser store 340. For example, each image (noisy image) represented in the rendering data 310 can be paired with the pseudo-ground truth (denoised image) that was generated for the image to provide an image and pseudo-ground truth pair. In this manner, the training data for fine-tuning is provided as a set of image and pseudo-ground truth pairs, which are specific to the application 324.

In general, fine-tuning can be described as a training process that can be performed over multiple iterations with each iteration adjusting one or more hyperparameters of the pre-trained ML-based denoiser. In some examples, each iteration provides a loss value determined using a loss function. The loss function can depend on the particular type of pre-trained denoiser that is being fine-tuned. Example loss functions can include, without limitation, pixel-wise loss (e.g., using mean squared error (MSE), mean absolute error (MAE)), perceptual loss, structural similarity loss, and adversarial loss. The loss value represents an accuracy of the pre-trained ML-based denoiser in providing output based on input from training data. In some examples, when the loss is determined to be sufficiently low (e.g., zero, below a threshold value) fine-tuning of the pre-trained ML-based denoiser can be determined to be complete. In some examples, a pre-determined number of iterations is executed.

In some implementations, multiple fine-tuned ML-based denoisers 312, 312', 312" can be fine-tuned using the set of image and pseudo-ground truth pairs. In some examples, each fine-tuned ML-based denoiser 312, 312', 312" is a different type of ML model.

In some examples, the fine-tuned ML-based denoiser 312 is deployed for denoising images. For example, the fine-tuned ML-based denoiser 312 is transmitted from the cloud-based system 304 to the client-side system 302. In some examples, the fine-tuned ML-based denoiser model 312 is integrated into an application 324' (e.g., a video game) that is distributed to users. For example, the application 324' can be downloaded by and installed to a computing device (e.g., a gaming console) to enable users to interact with the application (e.g., play the video game). Variations of deployment of the fine-tuned ML-based denoiser 312 are described in further detail herein.

In some implementations, in the case of multiple fine-tuned ML-based denoisers 312, 312', 312", one can be selected for deployment with the application 324'. For example, each of the fine-tuned ML-based denoisers 312, 312', 312" can be tested by the developer to evaluate performance of each. One of the fine-tuned ML-based denoisers 312, 312', 312", such as the fine-tuned ML-based denoiser 312, can be selected for deployment based on the performances (e.g., performs better in terms of quality of denoised images and/or consumption of technical resources).

During interactions, Monte Carlo rendering is performed to generate images in real-time (e.g., immediately responsive to interactions within the video game), each image being generated at a predefined SPP (e.g., < 10 SPP) and having a first level of noise. Each image is processed through the fine-tuned ML-based denoiser 312 to provide a denoised version of the image, referred to as a denoised image. In some examples, the denoised image has a second level of noise that is (significantly) less than the first level of noise. The denoised image is displayed (e.g., as a frame) to the user of the application.

In some examples, the fine-tuned ML-based denoiser 312 is provided as a whole including the computer-executable code of the denoiser as well as a set of hyperparameters. In some examples, the set of hyperparameters includes hyperparameters determined through pre-training and fine-tuning. In some examples, the fine-tuned ML-based denoiser 312 is provided as a part including only the hyperparameters. For example, and as described herein, a computing device can include a copy of the pre-trained ML-based denoiser pre-installed, which can be updated using the set of hyperparameters provided in the fine-tuned ML-based denoiser 312. In some examples, the set of hyperparameters includes hyperparameters determined through pre-training and fine-tuning. In some examples, the set of hyperparameters includes hyperparameters determined through fine-tuning only. In this manner, a size (in terms of memory) of the fine-tuned ML-based denoiser 312 can be minimized. The following table summarizes variations of the fine-tuned ML-based denoiser 312 in ascending order in terms of size, as well as use with a computing device when deployed as part of the application 324':

**Table 1: Variations for Deployment of Fine-Tuned ML-based Denoiser**

| Fine-Tuned ML-based Denoiser | Size | Deployment |
|---|---|---|
| Source Code + Hyperparameters | Largest | Installed on computing device for execution. |
| Hyperparameters (pre-trained + fine-tuned) | ... | Update all hyperparameters of pre-installed copy on computing device. |
| Hyperparameters (fine-tuned) | Smallest | Update only fine-tuned hyperparameters of pre-installed copy on computing device. |

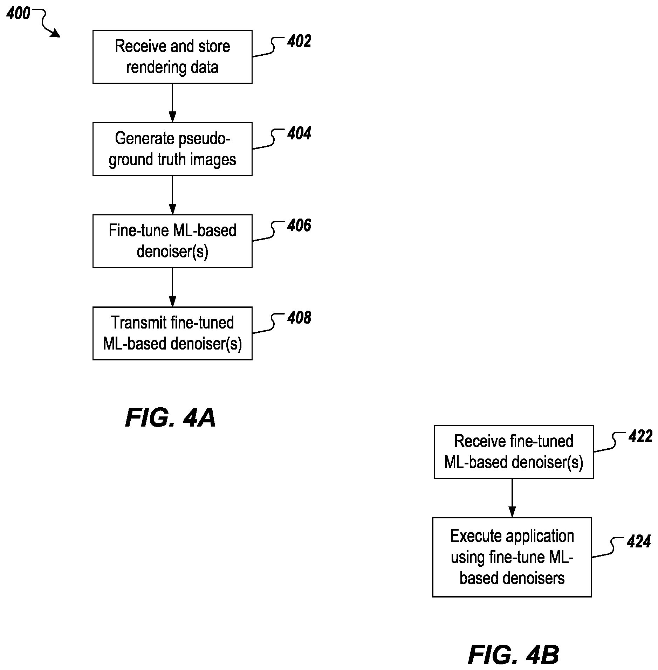

FIG. 4A is a flow diagram of an example process 400 in accordance with implementations of the present disclosure. In some examples, at least a portion of the example process 400 can be executed to provide fine-tuned ML-based denoisers for denoising images. As described in further detail herein, the fine-tuned ML-based denoisers can be deployed (e.g., in application builds) for denoising images generated in real-time (e.g., as frames for a video game generated in real-time using Monte Carlo rendering).

Rendering data is received and stored (402). For example, and as described in detail herein, the cloud-based system 304 receives the rendering data 310 from the client-side system 302 and stores the rendering data 310 in the rendering data store 334. In some examples, the rendering data 310 is image data of multiple images (e.g., tens, hundreds, thousands of images), each image depicting a scene (e.g., a scene within a 3D model, such as that represented in FIG. 1). In some examples, each image is generated using Monte Carlo rendering at a predefined SPP (e.g., < 10 SPP). For example, the application (e.g., a video game) can be executed by the computing device 320 (e.g., a gaming console) to depict the scene and to generate the rendering data 310.

Pseudo-ground truth images are generated (404). For example, and as described in detail herein, the rendering data 310 is processed by the ML-based denoising module 330 to generate pseudo-ground truths as denoised images. In some examples, the ML-based denoising module 330 executes a ML-based denoiser, which receives the rendering data 310 as input and provides pseudo-ground truths as output and stored in the pseudo-ground truth store 336. One or more pre-trained ML-based denoisers are fine-tuned (406). For example, and as described in detail herein, a pre-trained denoiser is fine-tuned to provide the fine-tuned ML-based denoiser 312. For example, the pre-trained denoiser is retrieved from the pre-trained denoiser store 338 and is fine-tuned by the fine-tuning module 332 using a set of image (noisy image) and pseudo-ground truth (denoised image) pairs.

The one or more fine-tuned ML-based denoisers are transmitted (408). For example, and as described in detail herein, the fine-tuned ML-based denoiser 312 is transmitted from the cloud-based system 304 to the client-side system. In some examples, the fine-tuned ML-based denoiser model 312 is integrated into an application 324' (e.g., a video game) that is distributed to users. For example, the application 324' can be downloaded by and installed to a computing device (e.g., a gaming console) to enable users to interact with the application (e.g., play the video game).

FIG. 4B is a flow diagram of an example process 420 in accordance with implementations of the present disclosure. In some examples, at least a portion of the example process 420 can be executed for deployment of applications for denoising images generated in real-time (e.g., as frames for a video game generated in real-time using Monte Carlo rendering).

One or more fine-tuned ML-based denoisers are received (422). For example, and as described in detail herein, the application 324' can be downloaded by and installed to a computing device (e.g., a gaming console) to enable users to interact with the application (e.g., play the video game). In some examples, the computing device receives the fine-tuned ML-based denoiser for execution by the computing device to denoise images generated during use of the application 324'. For example, and as described herein, the fine-tuned ML-based denoiser is provided as a set of hyperparameters that are used to populate a ML-based denoiser that is already installed on the computing device.

The application is executed using the one or more fine-tuned ML-based denoisers (424). For example, and as described in detail herein, during interactions within the application 324', Monte Carlo rendering is performed to generate images in real-time (e.g., immediately responsive to interactions within the video game), each image being generated at a predefined SPP (e.g., < 10 SPP) and having a first level of noise. Each image is processed through the fine-tuned ML-based denoiser 312 to provide a denoised version of the image, referred to as a denoised image. In some examples, the denoised image has a second level of noise that is (significantly) less than the first level of noise. The denoised image is displayed (e.g., as a frame) to the user of the application 324'.

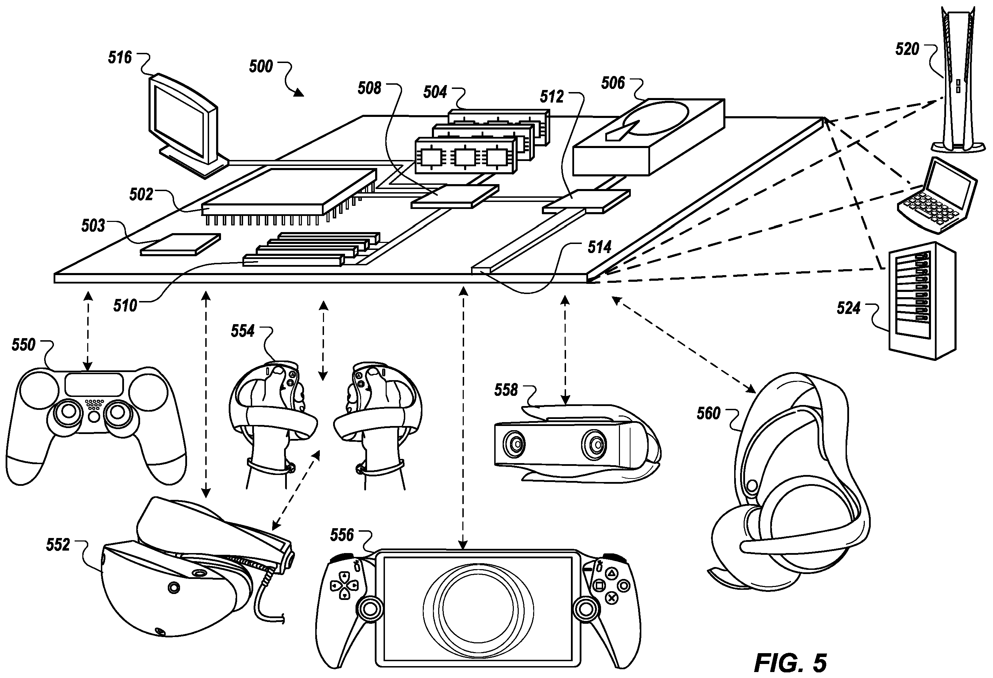

FIG. 5 shows an example of a computing device 500 and associated accessories that can be employed to execute implementations of the present disclosure. The computing device 500 is intended to represent various forms of gaming consoles such as PS5^{®}, PS4^{®}, PS3^{®}, PS2^{®} etc., desktops, workstations, personal digital assistants, servers, blade servers, mainframes, and other appropriate computers. The components shown here, their connections and relationships, and their functions, are meant to be examples only, and are not meant to be limiting. The computing device 500 can form at least a portion of a gaming system that can include one or more remote computing devices such as ones implementing a cloud-based portal or gaming platform.

In various implementations, the computing device 500 includes some combination of one or more processors or central processing units (CPUs) 502, one or more graphic processing units (GPUs) 503, memory 504, one or more storage devices 506, a high-speed interface 508, and/or a low-speed interface 512. In some implementations, the high-speed interface 508 connects to the memory 504 and multiple high-speed expansion ports 510. In some implementations, the low-speed interface 512 connects to a low-speed expansion port 514 and the storage device 504. In some implementations, the high-speed interface 508 connects to the storage device 504. Each of the processor 502, the GPU 503, the memory 504, the storage device 506, the high-speed interface 508, the high-speed expansion ports 510, and the low-speed interface 512, are interconnected using various buses, and may be mounted on a common motherboard or in other manners as appropriate. The processor 502 can process instructions for execution within the computing device 500, including instructions stored in the memory 504 and/or on the storage device 506 to display graphical information for a graphical user interface (GUI) on an external input/output device, such as a display 516 coupled to the high-speed interface 508. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 504 stores information within the computing device 500. In some implementations, the memory 504 is a volatile memory unit or units. In some implementations, the memory 504 is a non-volatile memory unit or units. The memory 504 may also be another form of a computer-readable medium, such as a magnetic or optical disk. In some implementations, the memory 504 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 506 is capable of providing mass storage for the computing device 500. In some implementations, the storage device 506 may be or include a computer-readable medium, such as a hard disk device, an optical disk device, a flash memory, or other similar solid-state memory device, or an array of devices, including devices in a storage area network or other configurations. In some implementations, the storage device 506 can include a high capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 506 can be configured to support expandable storage via compatible non-volatile memory express (NVMe) SSDs. Instructions can be stored in an information carrier, and when executed by one or more processing devices, such as processor 502, perform one or more methods, such as those described above. The instructions can also be stored by one or more storage devices, such as non-transitory computer-readable or machine-readable mediums, such as the memory 504, the storage device 506, or memory on the processor 502. The instructions can constitute software for providing interactive game play on a user interface such as a graphical user interface (GUI) presented on the display 516.

The high-speed interface 508 manages bandwidth-intensive operations for the computing device 500, while the low-speed interface 512 manages lower bandwidth-intensive operations. Such allocation of functions is an example only. In some implementations, the high-speed interface 508 is coupled to the memory 504, the display 516 (e.g., through a graphics processor or accelerator), and to the high-speed expansion ports 510, which may accept various expansion cards. In the implementation, the low-speed interface 512 is coupled to the storage device 506 and the low-speed expansion port 514. The low-speed expansion port 514, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 550 such as a DualSense^{®}, DualShock^{®}, or Access^{™} controllers for PlayStation^{®} devices, a virtual reality (VR) or augmented reality (AR) headset 552 such as the PS VR2 headset, accessory controllers 554 such as PS VR2 Sense^{™} a handheld gaming device 556 such as PlayStation Portal^{®}, a camera 558, and/or an earphone/headphone set 560 such as the PULSE Elite^{™} headset or the Pulse Explore^{™} earbuds. In some implementations, the computing device 500 includes one or more acoustic transducers, and/or is connected to one or more external acoustic transducers such as one or more speakers associated with the display 516.

The computing device 500 may be implemented in a number of different forms, as shown in the FIG. 5. For example, the computing device 500 may be implemented as a gaming console 520, or as one or more servers 524 or as a rack within a server. In some implementations, the computing device 500 may be implemented as a personal computer such as a laptop computer 522. In some implementations, the computing device 500 can be implemented as a mobile device such as the connected handheld gaming device 556. In some implementations, a computing device can include one or more of the computing device 500, and an entire system may be made up of multiple computing devices communicating with each other. For example, a gaming system can include one or more of a gaming console 520, one or more accessories, and a remote platform such as a cloud-based platform implemented on one or more servers 524.

The processor 502 can be implemented as a chipset of chips that include separate and multiple analog and digital processors. For example, the processor 502 can be a multi-core processor that supports high-speed processing and enables complex computational tasks, real-time physics simulations, and advanced artificial intelligence (AI) capabilities. In one example, the processor 502 includes at least 8 cores, at least 16 threads, and operates at variable frequencies around 3.5 GHz or more. In some implementations, the processor 502 may be a Complex Instruction Set Computers (CISC) processor, a Reduced Instruction Set Computer (RISC) processor, or a Minimal Instruction Set Computer (MISC) processor.

In some implementations, the GPU 503 includes a custom GPU that supports an advanced architecture such as the RDNA 2 architecture developed by AMD. In one example, the GPU 503 includes at least 36 compute units running at speeds of 2 GHz or more, and delivers performance of at least 10 teraflops. The GPU 503 can be configured to support high quality graphics rendering. For example, the GPU 503 can be configured to support hardware-accelerated ray tracing for enhanced realism in lighting and reflections, thereby providing a highly immersive gaming experience.

The computing device can be configured to interact with one or more connected input/output or accessory device in providing the gaming experience. In some implementations, the computing device communicates with a handheld controller 550-e.g., a DualSense^{®}, DualShock^{®}, or Access^{™} controller for PlayStation^{®} devices-to provide the gaming experience. In some implementations, the controller 550 features a high-fidelity haptic feedback system with one or more actuators that simulate a wide range of tactile sensations. In some implementations the controller 550 includes one or more adaptive triggers that adjust resistance based on in-game actions to provide for a realistic feel. The ergonomic design of the controller 550 can be configured to allow for comfortable use even in long gaming sessions. For example, the controller 550 can include textured grips and an optimized button layout. In some implementations, the controller 550 includes one or more of: integrated motion sensors, a high-resolution touchpad, and a built-in microphone array. The controller 550 includes an array of buttons, joysticks, and other controls that allow a user to interact with the computing device 500 to participate in interactive gameplay presented, for example, on a display device such as the display 516. The controller 550 can be powered by one or more regular or rechargeable batteries and supports both wireless and wired connectivity with the computing device 500, for example, via Bluetooth, WiFi, USB-C etc., or via a proprietary connection such as PlayStation Link^{™}. In some implementations, the controller 550 includes a light bar and player indicators for visual feedback and customization.

In some implementations, the input/output or accessory device includes a VR/AR headset 552. One example of such a headset is the PlayStation VR2 (PS VR2) headset that is configured to provide an immersive and interactive gaming experience. In some implementations, the headset 552 features dual organic light emitting device (OLED) displays with a combined resolution of 4000 x 2080 pixels-thus providing sharp visuals and a wide field of view. In some implementations, the VR/AR headset 552 includes advanced eye-tracking technology that enables foveated rendering, optimizing performance by focusing on where the user is looking. In some implementations, the headset 552 includes integrated cameras that facilitate tracking head movements without external sensors. In some implementations, the headset includes haptic feedback for tactile sensations and/or one or more acoustic transducers configured to provide a spatial sound effect the user. The headset 552 can include an adjustable headband and cushioned padding, and can be configured to connect to the computing device 500 either over a wireless network (e.g., over a WiFi^{®} or Bluetooth^{®} connection, or a proprietary connection such as PlayStation Link^{™}) or over a wire such as a USB-C cable.

In some implementations, the headset 552 can be configured to work in conjunction with one or more accessory controllers 554 such as the PlayStation VR2 Sense^{™} controllers. The accessory controllers 554 can be configured to enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 554 can be configured to provide a comfortable experience even during extended gameplay. In some implementations, the accessory controllers include one or more integrated sensors (accelerometer, gyroscope, etc.) and cameras to provide motion tracking. The accessory controllers 554 can be configured to connect to the computing device 500 and/or the headset 552 over a wireless connection such as WiFi^{®} or Bluetooth^{®}.

In some implementations, the computing device 500 can be connected to a handheld gaming device 556 such as the PlayStation Portal^{®}. The handheld gaming device 556 can be configured to stream games and media from the computing device 500 via a wireless connection such as WiFi^{®} or Bluetooth^{®}. The handheld gaming device 556 includes a high-resolution screen that allows users to play games and/or stream media remotely without using the display 516 connected to the computing device 500. This allows the display to be used for other purposes while the computing device 500 facilitates gameplay on the handheld gaming device 556. In some implementations, the handheld gaming device 556 is configured to act as a streaming receiver without running games natively on the device 556 itself. This makes the handheld gaming device 556 a convenient option for playing games run on the computing device 500, while leaving a TV connected to the computing device 500 free to be used for viewing other media. The handheld gaming device 556 can includes buttons and features similar to (or even same as) the controller 550, thus providing for a similar gaming experience as that with the controller 550.

In some implementations, the input/output or accessory devices can include a camera 558 and/or an earphone/headphone set 560 such as the PULSE Elite^{™} headset or the Pulse Explore^{™} earbuds. The camera 558 can be used to track user-movements, which in turn can be used as an input to an interactive game being executed on the computing device 500. The earphone/headphone set 560 can be used to provide audio feedback/output to a user from the computing device 500. In some implementations, the earphone/headphone set 560 can include a microphone configured to receive spoken inputs/instructions that in turn can be used to control an interactive game being executed on the computing device 500.

While this specification contains many specific implementation details, these should not be construed as limitations on the scope of what is being claimed, which is defined by the claims themselves, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub combination. Moreover, although features may be described above as acting in certain combinations and even initially be claimed as such, one or more features from a claimed combination can in some cases be excised from the combination, and the claim may be directed to a sub combination or variation of a sub combination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. Other implementations are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method for provisioning application-specific denoisers for denoising images, the method being executable by one or more processors and comprising:
receiving first rendering data representative of a first set of images rendered by a first application;
generating a first set of pseudo-ground truth images by processing the first rendering data through a machine learning (ML)-based denoiser;
fine tuning a first pre-trained ML-based denoiser using first training data comprising the first set of images and the first set of pseudo-ground truth images to provide a first fine-tuned pre-trained ML-based denoiser that is specific to the first application; and
deploying the first pre-trained ML-based denoiser with the first application for denoising images generated by the first application in real-time.

2. The method of claim 1, wherein the first fine-tuned pre-trained ML-based denoiser is provided as a set of hyperparameters that are stored with the first application.

3. The method of claim 2, further comprising replacing hyperparameters of a pre-installed denoiser on a computing device with the set of hyperparameters.

4. The method of claim 1, further comprising storing the first rendering data in a secure storage separate from rendering data received from one or more other sources.

5. The method of claim 4, wherein the first rendering data is received from a first developer and the one or more other sources comprise a second developer.

6. The method of claim 1, wherein the ML-based denoiser is of a first size and generates denoised images at a first speed and the first fine-tuned pre-trained ML-based denoiser is of a second size and generates denoised images at a second speed, the first size being greater than the second size and the first speed being slower than the second speed.

7. The method of claim 1, further comprising fine tuning a second pre-trained ML-based denoiser using the first training data, the second pre-trained ML-based denoiser being specific to the first application, wherein one of the first pre-trained ML-based denoiser and the second pre-trained ML-based denoiser is used with the first application.

8. The method of claim 1, further comprising:
receiving second rendering data representative of a second set of images rendered by a second application;
generating a second set of pseudo-ground truth images by processing the second rendering data through the ML-based denoiser;
fine tuning a second pre-trained ML-based denoiser using second training data comprising the second set of images and the second set of pseudo-ground truth images to provide a second fine-tuned pre-trained ML-based denoiser that is specific to the second application; and
deploying the second pre-trained ML-based denoiser with the second application for denoising images generated by the second application in real-time.

9. The method of claim 1, wherein the first application generates images in the first set of images using Monte Carlo rendering.

10. A non-transitory computer-readable storage medium coupled to one or more processors and having instructions stored thereon which, when executed by the one or more processors, cause the one or more processors to perform operations for provisioning application-specific denoisers for denoising images, the operations comprising:
receiving first rendering data representative of a first set of images rendered by a first application;
generating a first set of pseudo-ground truth images by processing the first rendering data through a machine learning (ML)-based denoiser;
fine tuning a first pre-trained ML-based denoiser using first training data comprising the first set of images and the first set of pseudo-ground truth images to provide a first fine-tuned pre-trained ML-based denoiser that is specific to the first application; and
deploying the first pre-trained ML-based denoiser with the first application for denoising images generated by the first application in real-time.

11. The non-transitory computer-readable storage medium of claim 10, wherein the first fine-tuned pre-trained ML-based denoiser is provided as a set of hyperparameters that are stored with the first application.

12. The non-transitory computer-readable storage medium of claim 11, wherein operations further comprise replacing hyperparameters of a pre-installed denoiser on a computing device with the set of hyperparameters.

13. The non-transitory computer-readable storage medium of claim 10, wherein operations further comprise storing the first rendering data in a secure storage separate from rendering data received from one or more other sources.

14. The non-transitory computer-readable storage medium of claim 13, wherein the first rendering data is received from a first developer and the one or more other sources comprise a second developer.

15. The non-transitory computer-readable storage medium of claim 10, wherein the ML-based denoiser is of a first size and generates denoised images at a first speed and the first fine-tuned pre-trained ML-based denoiser is of a second size and generates denoised images at a second speed, the first size being greater than the second size and the first speed being slower than the second speed.

16. A system, comprising:
a computing device; and
a computer-readable storage device coupled to the computing device and having instructions stored thereon which, when executed by the computing device, cause the computing device to perform operations for provisioning application-specific denoisers for denoising images, the operations comprising:
receiving first rendering data representative of a first set of images rendered by a first application;
generating a first set of pseudo-ground truth images by processing the first rendering data through a machine learning (ML)-based denoiser;
fine tuning a first pre-trained ML-based denoiser using first training data comprising the first set of images and the first set of pseudo-ground truth images to provide a first fine-tuned pre-trained ML-based denoiser that is specific to the first application; and
deploying the first pre-trained ML-based denoiser with the first application for denoising images generated by the first application in real-time.

17. The system of claim 16, wherein the first fine-tuned pre-trained ML-based denoiser is provided as a set of hyperparameters that are stored with the first application.

18. The system of claim 17, wherein operations further comprise replacing hyperparameters of a pre-installed denoiser on a computing device with the set of hyperparameters.

19. The system of claim 16, wherein operations further comprise storing the first rendering data in a secure storage separate from rendering data received from one or more other sources.

20. The system of claim 19, wherein the first rendering data is received from a first developer and the one or more other sources comprise a second developer.
